# EUROPÄISCHE PATENTANMELDUNG

(11) **EP 0 947 470 A1**
(43) Veröffentlichungstag der Anmeldung: **06.10.1999**
(21) Anmeldenummer: 97121405.1
(22) Anmeldetag: 18.02.1998
(51) Int. Cl.: C02F 1/00, C02F 1/14, E03B 3/28, B01D 5/00

(54) **Verfahren und Vorrichtung zur Gewinnung von Wasser aus feuchter Luft unter Anwendung von hygroskopem Material und Sonnenenergie**

(71) Anmelder: Lutz, Werner, 85540 Haar (DE)
(72) Erfinder: Lutz, Werner, 85540 Haar (DE)
(74) Vertreter: Münich, Wilhelm, Dr.

(57) **Zusammenfassung**

Die Erfindung betrifft eine Vorrichtung zur Gewinnung von Wasser aus feuchter Luft.

Dabei entzieht diese Vorrichtung unter Verwendung eines hygroskopischen Materials der Luft ihre Feuchtigkeit, wobei dies bevorzugt in der Nacht geschieht, und diese Vorrichtung bewirkt unter Sonneneinstrahlung die Ansammlung dieser Feuchtigkeit in Fonn von kondensiertem Wasserdampf. Anwendungsmöglichkeit ist beispielsweise die Verwendung zur Wassergewinnung in regenarmen Gebieten.

## Beschreibung

Die Erfindung besteht aus einer 4-seitigen Glas- ( Plexiglas- ) pyramide, mit hygroskopischem Material im Inneren, welche mittels Sonnenenergie, - durch Kondensation -, Wasser erzeugen kann.

### Beschreibung :

Auf einen Metallrahmen ausL-Profilen werden 4 gleichschenklige Dreiecke zu einer Pyramide formiert. Die Seiten werden überlappend verklebt.
Dieser Drahtkorb wird mit hygroskopischem Material ( Lavaasche, porösen Tonkugeln oder Salz ) gefüllt.

### FUNKTIONSBESCHREIBUNG :

Bei Sonnenuntergang wird die Pyramide mittels Hydraulikpumpe geöffnet ( Bodenplatte wird abgesenkt ) SKIZZE C Während der Nacht zieht das hygroskopische Material Wasseranteile aus der Luftfeuchtigkeit und speichert diese.
Bei Sonnenaufgang wird die Pyramide geschlossen ( Bodenplatte an Unterseite L-Profil gepresst ) SKIZZE B Durch die Sonneneinwirkung erwärmt sich das Innere der Pyramide bis auf ca. 100 ° Celsius, das gespeicherte Wasser im jeweiligen, hygroskopischen Stoff verdampft und kondensiert in der Pyramidenspitze, von wo das Wasser durch ein Rohr nach aussen abgeleitet wird. ( Siehe nachfolgende Skizze 4)

### WIRTSCHAFTLICHER NUTZEN :

Eine Pyramide mit ca. 9 m³ Rauminhalt könnte theoretisch bis zu 300 Liter wasser pro Tag produzieren.
Mittels dieser Erfindung könnte der weltweite Wassermangel in Trockengebieten und auf Inseln ohne Trinkwasser gelöst werden.

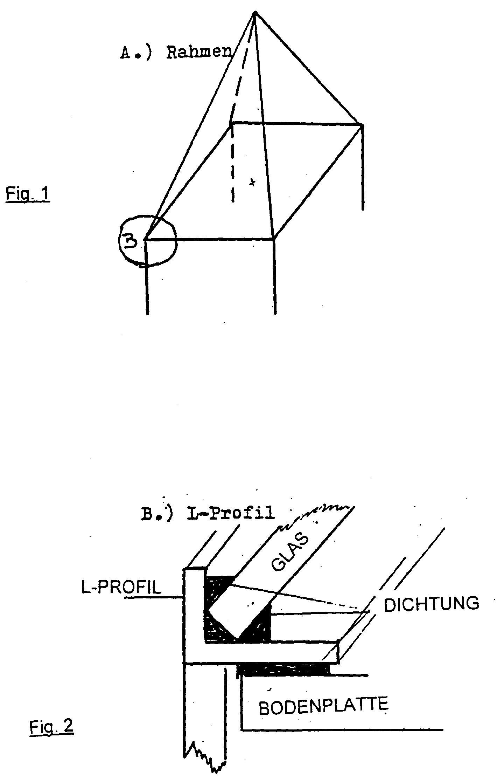

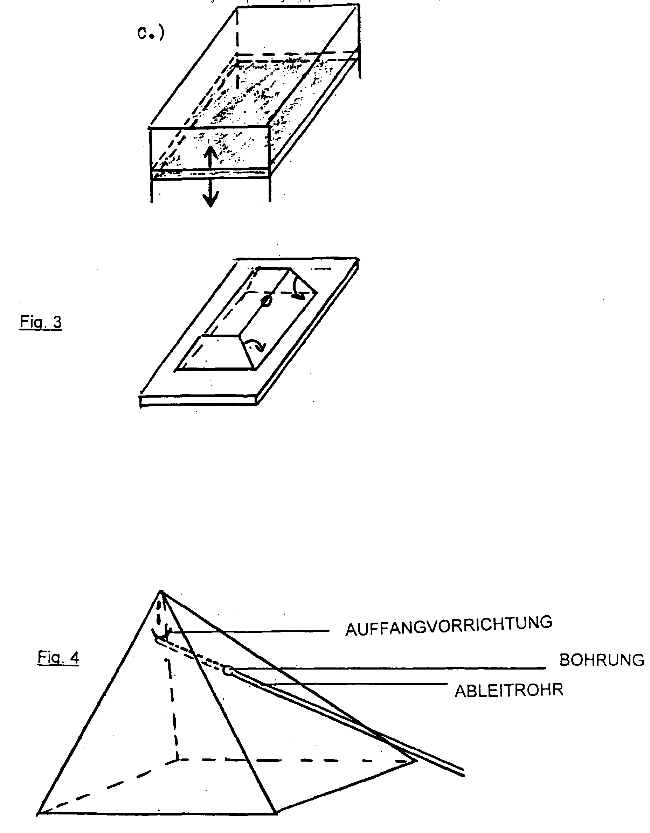

## Patentansprüche

1. Vorrichtung besteht aus 4-seitiger Glaspyramide auf Metallrahmen, deren Bodenplatte ( Pyramidengrundfläche ) sich absenken läßt ( mittels manueller Hydraulikpumpe )

2. Im inneren der Pyramide befindet sich hygroskopisches Material ( Tonkugeln, Lavaasche oder Zeolith-Patronen ) in einem Gitterkäfig

3. Eine Glasseitenfläche ist mit einer Bohrung versehen, durch welche ein Ablaufrohr mit Auffangphiole bis unter die Pyramidenspitze reicht.
